**Europäisches Patentamt**

**European Patent Office**

**Office européen des brevets**

(19)

(11) Veröffentlichungsnummer : **0 394 372 B1**

(12)

# EUROPÄISCHE PATENTSCHRIFT

(45) Veröffentlichungstag der Patentschrift :
**17.06.92 Patentblatt 92/25**

(51) Int. Cl.$^5$ : **G01B 3/16, B43L 9/04**

(21) Anmeldenummer : **89904042.2**

(22) Anmeldetag : **02.03.89**

(86) Internationale Anmeldenummer :
**PCT/EP89/00207**

(87) Internationale Veröffentlichungsnummer :
**WO 89/08235 08.09.89 Gazette 89/21**

(54) **MESSZIRKEL.**

(30) Priorität : **04.03.88 DE 3807035**

(43) Veröffentlichungstag der Anmeldung :
**31.10.90 Patentblatt 90/44**

(45) Bekanntmachung des Hinweises auf die
Patenterteilung :
**17.06.92 Patentblatt 92/25**

(84) Benannte Vertragsstaaten :
**AT BE CH DE FR GB IT LI LU NL SE**

(56) Entgegenhaltungen :
**EP-A- 0 037 196**
**DE-U- 8 620 276**
**FR-A- 2 536 343**

(73) Patentinhaber : **Kiefer, Klaus Jürgen**
**Jungfernstieg 34**
**W-2000 Hamburg 36 (DE)**
Patentinhaber : **Straten, Günter**
**Meilsdorfer Damm 12**
**W-2071 Siek-Meilsdorf (DE)**

(72) Erfinder : **Kiefer, Klaus Jürgen**
**Jungfernstieg 34**
**W-2000 Hamburg 36 (DE)**
Erfinder : **Straten, Günter**
**Meilsdorfer Damm 12**
**W-2071 Siek-Meilsdorf (DE)**

(74) Vertreter : **Richter, Werdermann & Gerbaulet**
**Neuer Wall 10**
**W-2000 Hamburg 36 (DE)**

EP 0 394 372 B1

**Beschreibung**

Die Erfindung betrifft einen Zirkel, bestehend aus zwei durch ein Scharnier schwenkbar verbundenen Schenkeln, von denen erste Schenkel ein eine Stahlspitze oder Zentriernadel als Stecheinrichtung tragendes Tragteil und der zweite Schenkel eine weitere Stecheinrichtung oder eine Zeicheneinrichtung tragenden Tragteil aufweist, oder bestehend aus zwei Schenkeln, von denen der erste Schenkel einen auswechselbaren Zeicheneinsatz und der zweite Schenkel eine Stahlspitze oder Zentriernadel als Stecheinrichtung aufweist, wobei der erste Schenkel und der zweite Schenkel über einen aus dünnen, ineinanderschiebbaren Rohrstücken gebildeten Verbindungssteg verbunden sind, wobei die Rohrstücke jeweils über in auf der Außenoberfläche der Rohrstücke ausgebildete Rasterrillen eingreifbare, federbelastete Dorne in Verschiebungsrichtung gegeneinander arretierbar sind, wobei an dem einen Schenkel oder an dem einen Tragteil in einem rechten Winkel zu dessen Längsachse ein etwa stabförmiges, auskragendes Richtelement lösbar befestigt ist, das als mit Längenteilungen versehenes Meßlineal ausgebildet ist und daß das andere Tragteil eine entsprechend ausgebildete, zur gleitbaren Durchführung des Richtelementes vorgesehene Durchgangsdurchbrechung aufweist, in der das Richtelement mittels einer Feststellschraube feststellbar ist, wie er aus dem DE-GM 86 20 276 bekannt ist.

Bei Zirkeln handelt es sich um Geräte zum Zeichnen von Kreisen oder Kurven, zum Abgreifen von Maßen und zum übertragen von Strecken. Der gewöhnliche Zirkel besteht aus zwei durch ein Scharnier verbundenen Schenkeln, von denen der eine eine Stahlspitze, der andere meist mit einem zusätzlichen Gelenk versehen, einen auswechselbaren Zeicheneinsatz, wie eine Mine, eine Reißfeder od. dgl. trägt, der oftmals auch durch eine zweite Stahlspitze ersetzt werden kann.

Beim Arbeiten mit derartigen Zirkeln besteht das Problem, daß Kreise mit bestimmten Radien zu zeichnen sind, wobei die Einhaltung des genauen Radius von großer Wichtigkeit ist.

Um hier eine entsprechende Genauigkeit einzuhalten, sind die bekannten Zirkel beim Meßlineal mit entsprechender Längenunterteilung anzulegen und hier die entsprechende Teilung abzugreifen.

Sodann ist der Zirkel, sofern er keine Arretierungseinrichtung besitzt, entsprechend vorsichtig auf die Zeichenplatte od.dgl. aufzusetzen, um dort den entsprechenden Radius zu zeichnen oder zu stechen. Unberücksichtigt bleiben dabei jedoch die Elastizitäten der Schenkel, die beispielsweise beim Aufdrücken des Schenkels zu einer unbeabsichtigten Vergrößerung des Radius führen können. Außerdem ist das Abgreifen von vorgegebenen Radienmaßen eine zusätzliche Belastung beim Zeichnen.

Daher ist bereits ein Zirkel der eingangs genannten Art vorgeschlagen worden, bei dem der erste Schenkel mit einer Meß- und Halterungseinrichtung versehen ist, die einendseitig an den ersten Schenkel angelenkt ist und an ihrem anderen Ende eine Stecheinrichtung aufweist, wobei die Meß- und Halterungseinrichtung eine Durchbrechung aufweist, durch die ein mit Längenteilungen versehenes Lineal hindurchführbar ist, das mit seinem einen Ende an dem Tragteil des zweiten Schenkels lösbar befestigt ist und mit seinem anderen, freien, durch die Durchbrechung hindurchführbaren Ende auskragend ist. Bei diesem Schenkel ist eine ganz spezielle Ausbildung der Stecheinrichtung vorgesehen, die es ermöglicht, den Stichdorn in zwei verschiedene Positionen einzurasten, wobei zwei mit den Längenteilungen zusammenwirkende Meßspitzen an der Meß- und Halterungseinrichtung den Positionen zugeordnet sind (DE-PS 36 26 588, DE-GM 86 20 276).

Auch sind schon verschiedene andere Vorschläge bekannt geworden.

Das DE-GM 80 27 860 betrifft einen Zirkel mit einem Zirkelkopf mit einer digitalen LCD-Abstandsanzeige zum Ablesen des Abstandes der Zirkelspitzen, wobei hier vorgesehen ist, daß in einem quaderförmig gestalteten, unten abgerundeten Zirkelkopf, der im oberen Teil beide Zirkelschenkel aufnimmt, in der oberen Hälfte ein LCD-Display angeordnet ist, das mit Hilfe eines elektronischen Winkelaufnehmers und einer batteriegespeisten Elektronik den jeweiligen Abstand der Zirkelspitzen anzeigt. Diesem Vorschlag ist also ein Zirkel zu entnehmen, bei dem der Abstand der Zirkelspitzen einstellbar ist, ohne daß ein Maßnehmen an einem Längenmaßstab notwendig wird. Dieser Zirkel ist allerdings mit dem Nachteil behaftet, daß die von der Meßeinrichtung festgestellten und angezeigten Abstandswerte aufgrund der dem Zirkel innewohnenden Elastizitätseigenschaften verfälscht sein können. Eine Entfernungsmeßeinrichtung zur Erfassung der Entfernung der sich gegenüberliegenden Schenkel oder Tragteile ist hierbei nicht vorgesehen.

Das DE-GM 81 31 855 schlägt einen Zirkel vor, bei dem eine digitale, die Länge eines Verschiebeweges der Zirkelspitzen zueinander anzeigende Meß- und Anzeigevorrichtung vorgesehen ist. Dabei werden Zirkelgrundtypen vorgeschlagen, wie sie im vorliegenden Patentgesuch enthalten sind. Jedoch erfolgt auch bei diesem Zirkel die Aufnahme der Zirkelbewegung über eine mechanische Abtastung, so daß dieser Zirkel nicht nur mit den Fehlern einer mechanischen Abtastung behaftet ist, sondern darüber hinaus auch noch die Verfälschungsmöglichkeiten aufgrund der Zirkelelastizitäten aufweist.

Der in der EP-0S 165 362 vorgeschlagene Zirkel weist an jedem Schenkel ein Zwischengelenk 32 bzw. 33 mit einer zu den Schwenkachsen parallelen Querachse auf, an dem jeweils ein angelenktes Tragteil angeordnet ist. Die beiden Tragteile sind durch einen Stab miteinander verbunden, der an dem einen Tragteil an einer als Führung und Stabklemme dienenden Vorrichtung angelenkt ist und der den anderen Tragteil durchgreift und an seinem Ende ein Gewinde aufweist, an dem eine Einstelleinrichtung angeordnet ist. Dabei ist der Stab mit Markierungen versehen, und der eine Tragteil ist mit einer elektronischen Vorrichtung zum Ablesen und Zählen der Markierungen versehen, wobei der Zählvorgang durchgeführt wird, während die Markierungen die Ablesevorrichtung beim Verstellen des Zirkels passieren. Die Ablesevorrichtung besteht dabei aus einem Sensor zum Ablesen der auf dem Stab aufgetragenen Markierungen, der elektrische Signale an eine Zählvorrichtung übermittelt, die ihrerseits eine Information erzeugt, die an eine digitale Anzeigeeinrichtung geleitet wird, um dort dem Benutzer das Zählergebnis anzuzeigen, wobei dieses einem dem Abstand der freien Enden der Schenkel entsprechenden Wert entspricht. Hierbei wird also nur eine indirekte Messung vorgenommen, die beispielsweise dann sofort fehlerhaft arbeitet, wenn die als Führung und Stabklemmeinrichtung dienende Vorrichtung 28 versehentlich geöffnet wird oder nicht so stark klemmt, daß eine Verschiebung des Verbindungsstabes ausgeschlossen ist. Eine große Meßsicherheit kann mit einem derartigen Zirkel nicht erreicht werden, da der direkte Abstand zwischen den Zirkelspitzen nicht festgestellt wird.

Aus der EP-0S 37 196 ist eine Vorrichtung zur Längenmessung bekannt, bei der Abstände vermittels Ultraschall erfaßt werden. Hierbei handelt es sich um eine Schieblehre, bei der erfaßte Abstände mittels Ultraschall Wellen, elektromagnetische Wellen oder Laserwellen gemessen werden. Das besondere Problem von Zirkeln tritt jedoch bei derartigen Schieblehren nicht auf, da diese ausreichend steif gestaltet werden können, um Elastizitäten zu vermeiden. Außerdem dürfte sich der Fachmann im Bereich der Reißzeuge auch nicht an Lösungen im Bereich der Schieblehren orientieren.

Ein allgemeines Ultraschallentfernungs-Meßsystem ist auch bereits aus IBM Technical Disclosure Bulletin... (Druckschrift Nr. 15) bekannt.

Eine andere Vorrichtung zur Messung kleiner Längen ist bereits in der DE-0S 36 30 887 vorgeschlagen worden. Hierbei handelt es sich um eine Vorrichtung zur Messung kleiner Längen mit einer in Richtung der zu messenden Länge beweglich gelagerten Tastspitze, mit einem Wandler zur Umwandlung der Bewegungen der Tastspitze in entsprechende elektrische Signale und mit einer Anzeigeeinrichtung zur Anzeige dieser Signale, wobei der Wandler ein optisches Interferometer enthält, das einen Meßwellenleiter aufweist, dessen eines Ende mit einem Laser und dessen anderes Ende mit einer optischen Einrichtung verbunden ist, die das Licht auf einen im Abstand angeordneten Meßspiegel richtet, der das Licht zu der optischen Einrichtung zurückwirft. Diese Vorrichtung ist insbesondere zur Messung sehr schneller Längenänderungen bei kleinen Auflagedrücken der Tastspitze geeignet.

Mit dieser Ausbildung ist ein Zirkel geschaffen, mit dem das bisher notwendige Abgreifen von Maßen von Meßlinealen entfällt und bei dem Maße gezeichnet oder gestochen werden können, ohne daß die dem Zirkel innewohnenden Elastizitätseigenschaften eine Verfälschung des Meßergebnisses hervorrufen.

Die Gesamtausführung dieses Meßzirkels ist jedoch immer noch mit der Möglichkeit einer Fehlbedienung behaftet. Wenn nämlich der Benutzer eines derartigen Zirkels bei dem Abgleich zwischen Meßspitze und der Längenteilung auf dem Meßlineal einen Ablesefehler macht, wird in bezug auf die Stech- oder Zeichenspitzen ein fehlerhaftes Maß eingestellt. Die Einstellgenauigkeit des Zirkels hängt daher im wesentlichen von der Ablesegenauigkeit bei der Einstellung ab.

Es ist auch bekannt, daß das analoge Einstellen eines Gerätes ungenau ist und daß es in dieser Hinsicht von Vorteil ist, analoge Anzeiger durch digitale Anzeiger zu ersetzen (FR-0S 25 36 343).

Es ist daher Aufgabe der vorliegenden Erfindung, einen Zirkel der eingangs genannten Art so weiterzubilden, daß der genaue Abgleich zwischen einer Meßspitze und einem Meßlineal und somit das analoge Einstellen eines Maßes entfallen kann und über eine elektronische Einrichtung durchführbar ist, wobei gleichzeitig die Verfälschung der Meßergebnisse durch Elastizitätseinflüsse im Zirkel vermieden werden sollen.

Diese Aufgabe wird durch einen Zirkel mit den im Patentanspruch 1 angegebenen Merkmalen bzw. mit den im Patentanspruch 2 angegebenen Merkmalen gelöst.

Eine derartige Entfernungsmeßeinrichtung erfaßt automatisch den Abstand zwischen den beiden Tragteilen. Dabei entspricht der zwischen der Entfernungsmeßeinrichtung und der Bezugsmeßfläche festgestellte Abstand l unter Berücksichtigung einer sich ergebenden Grunddifferenz dem Abstand L zwischen den entsprechenden Stech- bzw. Zeichenspitzen des Zirkels. Durch die Anordnung des stabförmigen, auskragenden Richtelementes wird sichergestellt, daß die sich gegenüberliegenden Tragteile immer eine zueinander parallele Stellung einnehmen, um Fehler aufgrund ungenügender Parallelität der Tragteile zueinander zu vermeiden. Die Durchgangsdurchbrechung ist dabei in bezug auf das Richtelement mit einer entsprechenden Passung versehen, so daß eine sichere Parallelführung gegeben ist. Dabei wird zumindest der Bereich der Durchgangsdurchbrechung und das Richtelement aus hochfesten Materialien hergestellt, so daß auch bei einem langen Gebrauch des Zirkels keine Meßfehler aufgrund eines in diesem Bereich auftretenden Verschleißes in Kauf genommen werden müssen.

Es ist vorgesehen, daß die Entfernungsmeßeinrichtung ein Rechenwerk zur Auswertung und Umrechnung der erhaltenen Meßwerte aufweist. Das Rechenwerk, das bevorzugterweise als per Eprom programmierbarer Rechner ausgebildet ist, ermöglicht es dabei, daß die erhaltenen Meßwerte in beliebiger Weise erfaßbar und anzeigbar sind. Es kann dabei vorgesehen sein, daß sensorisch die Art der verwendeten Stech- bzw. Zeicheneinrichtung erfaßt und die sich daraus ergebenden Meß- und Differenzwerte in das erfaßte Meßergebnis eingerechnet werden, so daß immer eine richtige Anzeige erfolgt. Gleichzeitig kann z.B. bei Vor- oder Eingabe einer von den üblichen DIN-Angaben abweichenden Längeneinheit eine automatische Umrechnung erfolgen.

Gemäß einer bevorzugten Ausführungsform ist vorgesehen, daß die Entfernungsmeßeinrichtung mit einem entsprechenden Speicherwerk versehen wird, in das bestimmte Einstellwerte eingebbar sind. Dabei ist vorgesehen, daß durch ein optisches oder akustisches Signal angezeigt wird, daß der eingespeicherte Wert optimal eingestellt ist.

Gemäß einer weiteren bevorzugten Ausführungsform ist vorgesehen, daß das Tastenfeld und die Meßwertanzeigeeinrichtung mit einem entsprechenden Rechner verbunden werden, so daß mit dem Zirkel auch alle notwendigen Berechnungsvorgänge durchführbar sind, so daß ein optimaler Einsatzbereich des Zirkels vorgesehen werden kann.

Es ist dabei vorgesehen, daß die Entfernungsmeßeinrichtung als kombiniertes Sende-Empfangsgerät zur Abstrahlung und Aufnahme von Schallwellen und die Bezugsmeßfläche als Schallreflektor ausgebildet ist. Hierbei kann entweder die Wellenlänge sich ausbildender stehender Schallwellen, insbesondere Ultraschallwellen oder die Laufzeit von reflektierten Schallwellen, insbesondere Ultraschallwellen als Maß für die Entfernung zwischen dem kombinierten Sende- und Empfangsgerät und dem Schallreflektor genutzt werden.

Gemäß einer anderen Alternative ist vorgesehen, daß die Entfernungsmeßeinrichtung als kombiniertes Sende-Empfangsgerät zur Abstrahlung und zur Aufnahme von Lichtwellen bzw. elektromagnetischen Wellen und die Bezugsmeßfläche als Reflektor für Lichtwellen oder elektromagnetische Wellen ausgebildet ist. Bei der Verwendung von Lichtwellen können beispielsweise elektronische Messungen unter Ablesung von Maßstäben bzw. Winkeln unter Zuhilfenahme optischer Mittel erfolgen, wobei genaueste Längenmessungen mit Hilfe von Lichtinterferenzen ausgeführt werden können, wozu die verschiedenen Interferenzenkomparatoren verwendet werden. Hiermit können Längen von Bruchteilen eines Millimeters auf wenige $\mu$-Meter genau gemessen werden.

Gemäß einer weiteren Alternative ist vorgesehen, daß die Entfernungsmeßeinrichtung als Laserinterferometer ausgebildet ist, wobei das eine Tragteil in einem Gehäuse eine LaserstrahlerzeugungSeinrichtung, einen auf einer zur Laserstrahlaustrittsrichtung vertikal angeordneten Achse angeordneten ortsfesten Spiegel, einen auf der Achse gegenüberliegend angeordneten Fotodetektor und einen im Schnittpunktsbereich der Laserstrahlaustrittsrichtung und der Achse angeordneten halbdurchlässigen Spiegel aufweist und an dem gegenüberliegenden Tragteil als Bezugsmeßfläche ein Spiegel angeordnet ist. Hierbei wird als monochromatische Lichtquelle ein Laser benutzt. Wenn sich das Meßobjekt bewegt, ergeben sich durch die sich überlagernden Strahlen Interferenzen, die abwechselnd Lichtverstärkungen oder -auslöschungen bewirken, die der Fotodetektor registriert. Ein voller Zyklus der Lichthelligkeit entsteht, wenn sich der als Bezugsmeßfläche vorgesehene Spiegel lediglich um eine halbe Lichtwellenlänge bewegt hat. Es kann daher auch anstelle des Fotodetektors eine Beobachtungseinrichtung für den Benutzer des Zirkels vorgesehen sein. Bei einer elektronischen Messung erfolgt die Messung des zurückgelegten Weges respektive der Verstellung des Zirkels durch Abzählen der vom Fotodetektor gelieferten Impulse.

Auflösungen bis in kleinste Bereiche sind möglich, so daß der Genauigkeit des Zirkels lediglich noch durch die Feinheit der Meß- und Zeichenspitzen Grenzen gesetzt werden. Eine noch genauere Messung wird möglich, wenn ein Zwei-Frequenz-Laser vorgesehen ist und automatisch die von Luftdruck, -temperatur und -feuchte verursachten Veränderungen der tatsächlichen Lichtwellenlänge berücksichtigt werden.

Es ist vorgesehen, daß an einem der Schenkel oder Tragteile eine Meßwertanzeigeeinrichtung mit einer Meßwertanzeige, wie beispielsweise Ziffernanzeigeröhren, Leuchtdioden oder Flüssigkristalle angeordnet ist. Dabei wird die Einstellung des Zirkels, die innerhalb der Entfernungsmeßeinrichtung elektronisch gespeichert ist, also in Form bestehender elektrischer Spannungen oder Ströme vorliegt, als Zahlenwert angezeigt. Da die Ziffernröhrenanzeigen und auch die Leuchtdiodenanzeigen einen relativ hohen Strombedarf haben, und so die Lebensdauer der in der Entfernungsmeßeinrichtung als Energiequelle vorzusehenden Batterie begrenzen, ist bevorzugterweise vorgesehen, daß die Anzeige nur bei Bedarf per Knopfdruck eingeschaltet wird. Für Zirkel mit einem zu erwartenden Dauereinsatz ist daher eine Flüssigkeitskristallanzeige vorzusehen, bei der eine dünne Schicht eines sogenannten Flüssigkeitskristalls je nach angelegter Spannung durchsichtig oder undurchsichtig wird, d.h., es wird also kein Licht erzeugt, sondern nur das vorhandene Licht auf kontrollierte Weise reflektiert oder absorbiert, so daß die angelegte Spannung nur zur Steuerung der Vorgänge dient. Die Meßwertanzeigeeinrichtung ist bei einer zu bevorzugenden Weiterbildung mit einem Tastenfeld als Eingabe für den gewünschten Einstellwert des Zirkels vorzusehen. Sie kann dann ein optisches oder akustisches Signal anzeigen, ob und wenn der vorgegebene Sollwert dem eingestellten Istwert entspricht.

Vorteilhafte und zweckmäßige Ausgestaltungen der Erfindung sind in den Unteransprüchen gekennzeichnet.

In der Zeichnung ist der Gegenstand der Erfindung anhand von Ausführungsbeispielen dargestellt, und zwar zeigt

**Fig. 1** in einer Seitenansicht den Zirkel,

**Fig. 2** in einer vergrößerten Ausschnittsdarstellung eine Entfernungsmeßeinrichtung,

**Fig. 3** in einer vergrößerten Ausschnittsdarstellung eine weitere Ausführungsform einer Entfernungsmeßeinrichtung,

**Fig. 4** in einer vergrößerten Ausschnittsdarstellung eine weitere Ausführungsform einer Entfernungsmeßeinrichtung und

**Fig. 5** in einer Seitenansicht eine weitere Ausführungsform eines Zirkels.

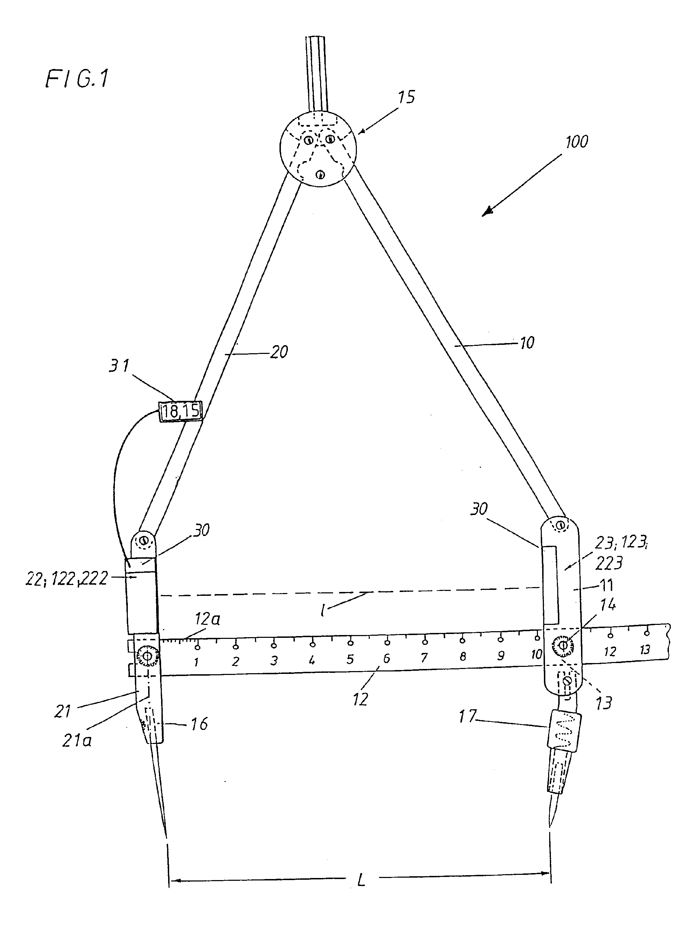

Der in Fig. 1 mit 100 bezeichnete Zirkel besteht aus zwei Schenkeln 10,20, die über ein Scharnier 15 verbunden sind. Dabei ist an dem vom Scharnier 15 abgewandten Ende des Schenkels 20 das Tragteil 21 angelenkt, dessen Längsachse mit 21a bezeichnet ist und das die Entfernungsmeßeinrichtung trägt, die als akustisches Sende-Empfangsgerät 22, als optisches bzw. elektromagnetisches Sende-Empfangsgerät 122 oder als Laserinterferometer 222 ausgebildet sein kann.

An dem anderen Tragteil 11 ist dann die entsprechende Bezugsmeßfläche 23;123 als Schallreflektor oder als Reflektor für Lichtwellen oder elektromagnetische Wellen oder als Bezugsmeßfläche 223 angeordnet, die durch einen Spiegel 29 gebildet wird. An einer beliebigen Stelle des Zirkels, in der Zeichnung am Schenkel 20 ist dann eine Anzeigeeinrichtung 31 angeordnet, die über das Rechenwerk 24 mit der Entfernungsmeßeinrichtung 22;122;222 verbunden ist und den jeweils gemessenen Meßwert über Zifferanzeigeröhren, Leuchtdioden oder Flüssigkristalle anzeigt.

Die Wirkungsweise der Entfernungsmeßeinrichtung 22;122;222 ist dabei wie folgt: über das kombinierte Sende- und Empfangsgerät wird ein Meßsignal ausgesandt und nach Reflektion ausgewertet, wodurch ein Meßsignal erhalten wird, das in bezug auf den Abstand 1 zwischen der Entfernungsmeßeinrichtung 22;122;222 und der Bezugsmeßfläche 23;123;223 steht. Im Rechenwerk 30 ist dann bereits die durch geometrische Gegebenheiten vorgegebene Differenz zwischen der Meßdistanz 1 und dem tatsächlichen Abstand L der Meß- oder Zeichenspitzen vorgegeben, so daß die Umrechnung des erhaltenen Meßwertes und eine Anzeige des tatsächlichen Istwertes in der Anzeigeeinrichtung 31 erfolgt, so daß ein problemloses Einstellen des Zirkels möglich ist.

An dem Tragteil 21 ist dabei im rechten Winkel auskragend ein etwa stabförmiges Richtelement 12 angeordnet, das durch eine Durchgangsdurchbrechung 13 im Tragteil 21 hindurchgeführt ist. Die Durchgangsdurchbrechung 13 ist dabei mit einer Feststelleinrichtung 14 versehen, so daß ein einmal eingestellter Meßwert auch für eine Dauereinstellung fixierbar ist. Auf diese Weise ist der mit den Stech- bzw. Zeicheneinrichtungen 16,17 abgreifbare oder aufzubringende Abstand L immer sicher einstellbar, feststellbar und fixierbar.

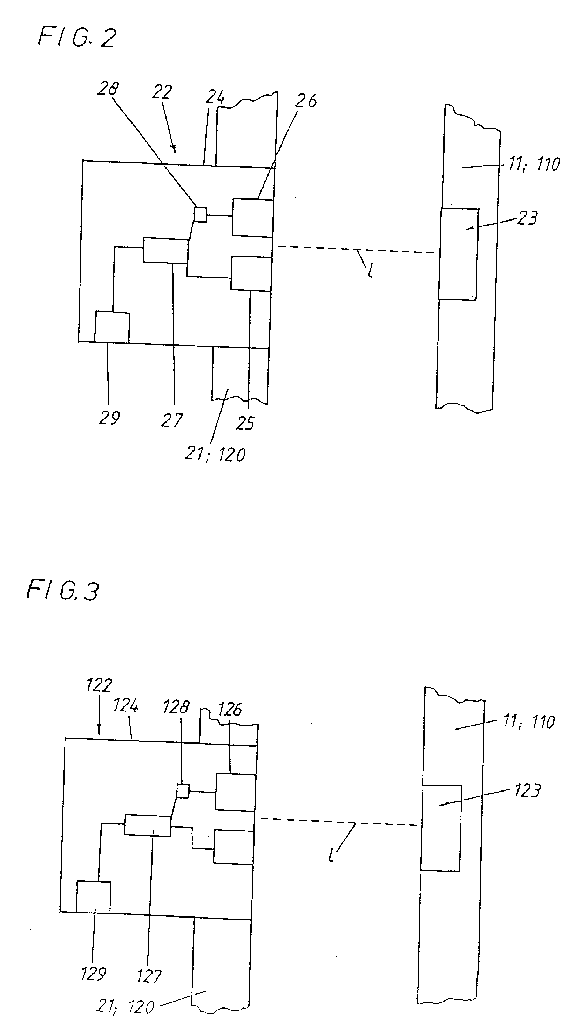

In Fig. 2 ist eine bevorzugte Ausführungsform der Entfernungsmeßeinrichtung 22 schematisch dargestellt. Das an dem Tragteil 21 oder dem Schenkel 120 befestigte Gehäuse 24 weist eine Schallwellenerzeugungseinrichtung zur Erzeugung von Schallwellen, bevorzugterweise von Ultraschall auf, deren Abstrahlungsrichtung auf die als Schallreflektor ausgebildete Bezugsmeßfläche 23 gerichtet ist, die an dem Tragteil 11 bzw. dem Schenkel 110 befestigt ist. Im Rückstrahlungsbereich des Schallreflektors ist dann eine Schallempfangseinrichtung 26 angeordnet.

Mit der als Ultraschallsender ausgebildeten Schallerzeugungseinrichtung 25 und der Schallempfangseinrichtung 26 ist eine Zeitmeßeinrichtung 27 verbunden, die als supergenau arbeitende Stoppuhr ausgebildet sein sollte. Beim Empfang des ersten vom Volumen her wichtigen Echos des von der Schallerzeugungseinrichtung 25 ausgesandten und von der Bezugsmeßfläche 23 reflektierten Schalls stoppt die Zeitmeßeinrichtung 27 und der Abstand 1 wird errechnet. Die Zeitmeßeinrichtung 27 kann dabei mit einem in der Zeichnung nicht dargestellten Temperaturfühler versehen sein und das Meßergebnis in Abhängigkeit von der Umgebungstemperatur korrigieren, da die Schallgeschwindigkeit durch die Umgebungstemperatur im wesentlichen beeinflußt wird. Weiterhin kann vorgesehen sein, für sehr genaue Messungen Korrektureinrichtungen für Differenzen, die sich durch Luftdruckschwankungen und unterschiedliche Luftfeuchtigkeit ergeben, vorzusehen.

Die Benutzung dieser Meßeinrichtung geschieht durch Auslösung des im oder am Gerätegehäuse 24 angeordneten Schalters 29, nach dessen Auslösung mit einer kurzen Verzögerung,in deren Verlauf sich die Elektronik stabilisiert, ein Ultraschallsignal ausgesandt wird. Gleichzeitig läuft die Zeitmeßeinrichtung 27 an, die in der voranstehend beschriebenen Weise stoppt und nach Errechnung der Distanz 1 ein Signal an das Rechenwerk 30 abgibt, das die entsprechende Umrechnung vornimmt und den Abstand L der Anzeigeeinrichtung 31 (Fig.1) zur Anzeige bringt. Bei einer Bewegung des Tragteils 11 oder des Schenkels 110 in der mit X bezeichneten Pfeilrichtung kann dann immer die sich ergebende Distanz 1 festgestellt werden. Es kann auch vorgesehen sein, zwischen die Schallempfangseinrichtung 26 und die Zeitmeßeinrichtung 27 eine Filtereinrichtung 28 zu schalten, die durch entsprechende Vorfilterung das erhaltene Signal von Fehlereinflüssen befreit.

In Fig. 3 ist eine weitere bevorzugte Ausführungsform der Entfernungsmeßeinrichtung 122 schematisch dargestellt. Das an dem Tragteil 21 oder dem Schenkel 120 befestigte Gehäuse 124 weist eine Erzeugungseinrichtung zur Erzeugung von Lichtwellen oder elektromagnetischen Wellen auf, deren Abstrahlungseinrichtung auf die als Reflektor für Lichtwellen oder elektromagnetischen Wellen ausgebildete Bezugsmeßfläche 123 gerichtet ist, die an dem Tragteil 11 bzw. dem Schenkel 110 befestigt ist. Im Rückstrahlungsbereich des Reflektors ist dann eine Empfangseinrichtung 126 angeordnet. Mit der Erzeugungseinrichtung 125 und der Empfangseinrichtung 126 ist eine Zeitmeßeinrichtung 127 verbunden, die als supergenau arbeitende Stoppuhr ausgebildet sein sollte. Beim Empfang des ersten vom Volumen her wichtigen Echos des von der Erzeugungseinrichtung 125 ausgesandten und von der Bezugsmeßfläche 123 reflektierten Signals stoppt die Zeitmeßeinrichtung 127 und der Abstand 1 wird errechnet. Es kann vorgesehen sein, für sehr genaue Messungen Korrektureinrichtungen für Differenzen, die sich durch Luftdruckschwankungen und unterschiedliche Luftfeuchtigkeit der elektrische Störfelder ergeben, vorzusehen. Die Benutzung dieser Meßeinrichtung geschieht durch Auslösung des im oder am Gerätegehäuse 124 angeordneten Schalters 129, nach dessen Auslösung mit einer kurzen Verzögerung,in deren Verlauf sich die Elektronik stabilisiert, ein Signal ausgesandt wird. Gleichzeitig läuft die Zeitmeßeinrichtung 127 an, die in der voranstehend beschriebenen Weise stoppt und nach Errechnung der Distanz 1 ein Signal an das Rechenwerk 30 abgibt, das die entsprechende Umrechnung vornimmt und den Abstand L der Anzeigeeinrichtung 31 (Fig.1) zur Anzeige bringt. Bei einer Bewegung des Tragteils 11 oder des Schenkels 110 in der mit X bezeichneten Pfeilrichtung kann dann immer die sich ergebende Distanz 1 festgestellt werden. Es kann auch vorgesehen sein, zwischen die Schallempfangseinrichtung 126 und die Zeitmeßeinrichtung 127 eine Filtereinrichtung 128 zu schalten, die durch entsprechende Vorfilterung das erhaltene Signal von Fehlereinflüssen befreit.

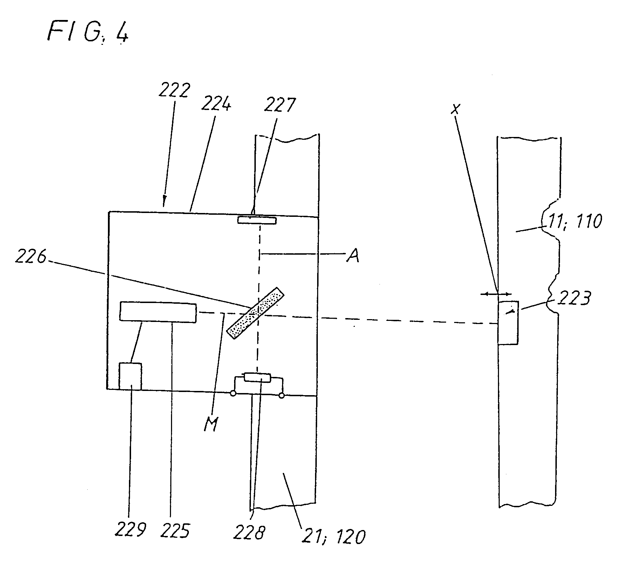

In Fig. 4 ist eine weitere bevorzugte Ausführungsform der Entfernungsmeßeinrichtung 222 schematisch dargestellt. Hierbei ist in dem Gehäuse 224, das an dem Tragteil 21 oder dem Schenkel 120 befestigt ist, eine über einen Schalter 229 betätigbare Laserstrahlerzeugungseinrichtung 225 so angeordnet, daß die Laserstrahlaustrittsrichtung M senkrecht auf den als Bezugsmeßfläche 223 wirkenden Spiegel auftrifft. Auf einer zur Laserstrahlaustrittsrichtung M vertikal angeordneten Achse A sind sich gegenüberliegend ein ortsfester Spiegel 227 und ein Fotodetektor 228 angeordnet, während im Schnittpunkt der Achse A und der Laserstrahlaustrittsrichtung M der halbdurchlässige Spiegel 226 angeordnet ist. Der als Bezugsmeßfläche 223 angeordnete Spiegel ist dabei an dem Tragteil 11 oder dem Schenkel 110 befestigt und wird bei einer Bewegung des Zirkels in der mit X bezeichneten Pfeilrichtung bewegt.

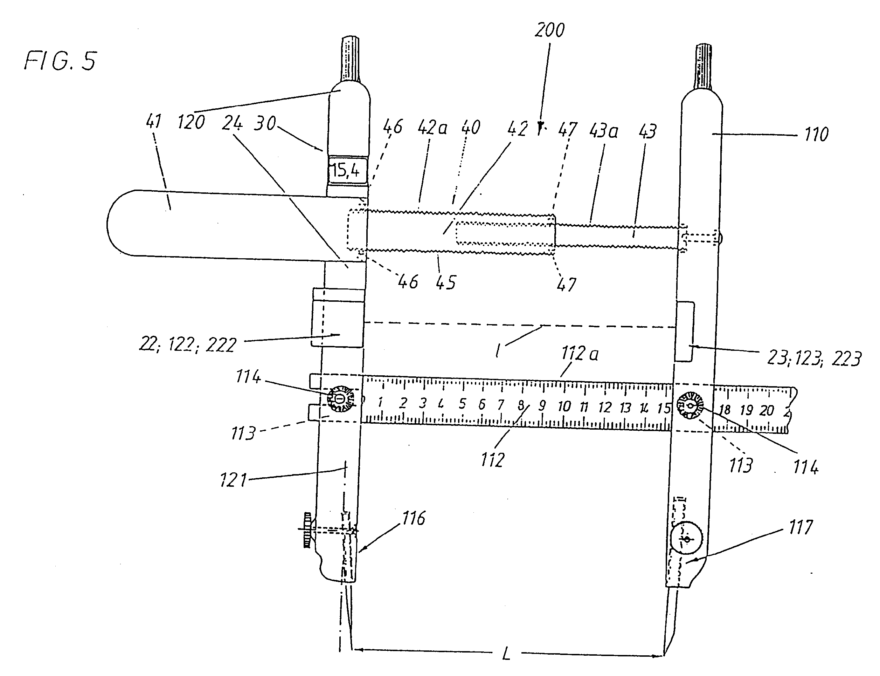

In Fig. 5 ist eine weitere Ausführungsform des Zirkels 200 dargestellt, bei der der Zirkel aus zwei parallelen Schenkeln 110,120 besteht, die über einen aus dünnen, ineinanderschiebbaren Rohrstücken 41,42,43 gebildeten Verbindungssteg 40 verbunden sind, wobei die Rohrstücke 41,42,43 jeweils über in auf der Außenoberfläche 42a,43a der Rohrstücke 42,43 ausgebildete Rasterrillen 45 eingreifbare, federbelastete Dorne 46,47 in Verschieberichtung gegeneinander arretierbar sind. Wenn nun der Abstand zwischen der Stecheinrichtung 116 und dem Zeicheneinsatz 117 verändert werden soll, wird der Verbindungssteg 40 gelenkt oder verkürzt. Anstelle der in der Zeichnung beispielhaft dargestellten Stecheinrichtung 116 oder des Zeicheneinsatzes 117 können auch andere für Zirkel übliche Ausrüstungen, wie zwei Zentriernadeln oder wie Tuschfüller angeordnet werden.

Der Schenkel 120 ist mit der voranstehend beschriebenen Entfernungsmeßeinrichtung 22;122;222 versehen, während der Schenkel mit der ebenfalls voranstehend beschriebenen Bezugsmeßfläche 23;123;223 versehen ist.

Die Erfindung ist nicht auf die voranstehend dargestellten und beschriebenen Ausführungsformen beschränkt. Da der wesentliche Erfindungsgedanke in der elektronischen bzw. berührungslosen Erfassung des einzustellenden oder abzugreifenden Abstandes der Stech- und/oder Zeichenspitzen des Zirkels besteht, liegt eine andere Anordnung der Entfernungsmeßeinrichtung und eine andere, die gleiche Wirkung erzielende Art einer Entfernungsmeßeinrichtung ebenso im Rahmen der Erfindung wie eine andere Zirkelausbildung.

**Patentansprüche**

1. Zirkel (100), bestehend aus zwei durch ein Scharnier (15) schwenkbar verbundenen Schenkeln (10,20), von denen der eine Schenkel (20) ein eine Stahlspitze oder Zentriernadel als Stecheinrichtung (16) tragendes Tragteil (21) und der andere Schenkel (10) eine weitere Stecheinrichtung oder eine Zeicheneinrichtung (17) tragenden Tragteil (11) aufweist, wobei an dem einen Tragteil (21) in einem rechten Winkel zu dessen Längsachse (21a) ein etwa stabförmiges, auskragendes Richtelement (12) lösbar befestigt ist, das als mit Längenteilungen (12a) versehenes Meß- lineal ausgebildet ist und daß das andere Tragteil (11) eine entsprechend ausgebildete, zur gleitbaren Durchführung des Richtelementes (12) vorgesehene Durchgangsdurchbrechung (13) aufweist, in der das Richtelement (12) mittels einer Feststellschraube (14) feststellbar ist,

dadurch gekennzeichnet,

daß einer der Tragteile (11,21) neben dem Richtelement (12) und in bezug auf die Längsachse (21a) in einem Abstand hierzu eine Entfernungsmeßeinrichtung (22; 122;222) zur Erfassung der Entfernung zu einer an dem jeweils gegenüberliegenden Schenkel (10,20) oder Tragteil (11,21) im Bereich der Stech- oder Zeicheneinrichtungen (16,17) angeordneten Bezugsmeßfläche (23; 123;223) aufweist, wobei die Entfernungsmeßeinrichtung

a) als kombiniertes Sende-Empfangsgerät (22) zur Abstrahlung und Aufnahme von Schallwellen und die Bezugsmeßfläche (23) als Schallreflektor, oder

b) als kombiniertes Sende-Empfangsgerät (122) zur Abstrahlung und zur Aufnahme von elektromagnetischen Wellen, insbesondere von Lichtwellen, und die Bezugsmeßfläche (123) als Reflektor für Lichtwellen oder elektromagnetische Wellen ausgebildet ist, oder

c) als Laserinterferometer (222) ausgebildet ist, bei dem das eine Tragteil (21) in einem Gehäuse eine Laserstrahlerzeugungseinrichtung (25), einen auf einer zur Laserstrahlaustrittsrichtung (M) vertikal angeordneten Achse (A) angeordneten ortsfesten Spiegel (27), einen auf der Achse (A) gegenüberliegend angeordneten Fotodetektor (28) und einen im Schnittpunktsbereich der Laserstrahlaustrittsrichtung (M) und der Achse (A) angeordneten halbdurchlässigen Spiegel (26) aufweist und an dem gegenüberliegenden Tragteil als Bezugsmeßfläche (223) ein Spiegel (29) angeordnet ist, und

daß an einem der Schenkel (10,20) oder Tragteile (11, 21) eine Meßwertanzeigeeinrichtung (30) mit einer Meßwertanzeige, wie beispielsweise Ziffernanzeigeröhren, Leuchtdioden oder Flüssigkristalle angeordnet ist, und die Entfernungsmeßeinrichtung (22;122;222) ein Rechenwerk (24) zur Auswertung und Umrechnung der erhaltenen Meßwerte aufweist.

2. Zirkel (200), bestehend aus zwei Schenkeln (110,120), von denen der erste Schenkel (110) einen auswechselbaren Zeicheneinsatz (117) und der zweite Schenkel (120) eine Stahlspitze oder Zentriernadel als Stecheinrichtung (116) aufweist, wobei der erste Schenkel (110) und der zweite Schenkel (120) über einen aus dünnen, ineinanderschiebbaren Rohrstücken (41,42,43) gebildeten Verbindungssteg (40) verbunden sind, wobei die Rohrstücke (41,42,43) jeweils über in auf der Außenoberfläche der Rohrstücke ausgebildete Rasterrillen (45) eingreifbare, federbelastete Dorne (46,47) in Verschiebungsrichtung gegeneinander arretierbar sind, wobei an dem einen Schenkel (120) in einem rechten Winkel zu dessen Längsachse (121a) ein etwa stabförmiges, auskragendes Richtelement (112) lösbar befestigt ist, das als mit Längenteilungen (112a) versehenes Meßlineal ausgebildet ist und daß der andere Schenkel (110) eine entsprechend ausgebildete, zur gleitbaren Durchführung des Richtelementes (112) vorgesehene Durchgangsdurchbrechung (113) aufweist, in der das Richtelement (112) mittels einer Feststellschraube (114) feststellbar ist,

dadurch gekennzeichnet,

daß einer der Schenkel (110,120) neben dem Richtelement (12) und in bezug auf die Längsachse (21a) in einem Abstand hierzu eine Entfernungsmeßeinrichtung (22;122; 222) zur Erfassung der Entfernung zu einer an dem jeweils gegenüberliegenden Schenkel (110,120) im Bereich der Stech- oder Zeicheneinrichtungen (16,17) angeordneten Bezugsmeßfläche (23;123;223) aufweist, wobei die Entfernungsmeßeinrichtung

a) als kombiniertes Sende-Empfangsgerät (22) zur Abstrahlung und Aufnahme von Schallwellen und die Bezugsmeßfläche (23) als Schallreflektor, oder

b) als kombiniertes Sende-Empfangsgerät (122) zur Abstrahlung und zur Aufnahme von elektromagnetischen Wellen, insbesondere von Lichtwellen, und die Bezugsmeßfläche (123) als Reflektor für Lichtwellen oder elektromagnetische Wellen ausgebildet ist, oder

c) als Laserinterferometer (222) ausgebildet ist, bei dem das eine Tragteil (21) in einem Gehäuse eine Laserstrahlerzeugungseinrichtung (25), einen auf einer zur Laserstrahlaustrittsrichtung (M) vertikal angeordneten Achse (A) angeordneten ortsfesten Spiegel (27), einen auf der Achse (A) gegenüberliegend angeordneten Fotodetektor (28) und einen im Schnittpunktsbereich der Laserstrahlaustrittsrichtung (M) und der Achse (A) angeordneten halbdurchlässigen Spiegel (26) aufweist und an dem gegenüberliegenden Tragteil als Bezugsmeßfläche (223) ein Spiegel (29) angeordnet ist, und

daß an einem der Schenkel (110,120) eine Meßwertanzeigeeinrichtung (30) mit einer Meßwertanzeige, wie beispielsweise Ziffernanzeigeröhren, Leuchtdioden oder Flüssigkristalle angeordnet ist, und die Entfernungsmeßeinrichtung (22;122;222) ein Rechenwerk (24) zur Auswertung und Umrechnung der erhaltenen Meßwerte aufweist.

3. Zirkel nach Anspruch 1 oder 2,

dadurch gekennzeichnet,

daß an einem der Schenkel (10,20;110,120) oder Tragteile (11,21) eine Meßwertanzeigeeinrichtung (31), bestehend aus Ziffernanzeigeröhren, Leuchtdioden oder Flüssigkristallen angeordnet ist.

4. Zirkel nach einem der Ansprüche 1 bis 3,

dadurch gekennzeichnet,

daß die Entfernungsmeßeinrichtung (22;122;222) ein Speicherwerk, in das vorgebbare Einstellwerte eingebbar sind, aufweist und daß eine optische oder akustische Signalanzeige zur Anzeige der optimalen Einstellung des jeweils eingespeicherten Wertes vorgesehen ist.

5. Zirkel nach einem der Ansprüche 1 bis 4,

dadurch gekennzeichnet,

daß die Entfernungsmeßeinrichtung (22;122;222) mit einem Rechner zur Durchführung aller notwendigen Berechnungsvorgänge versehen wird.


## Claims

1. Compasses (100), comprising two branches (10,20) swivellably interconnected by means of a hinge (15), of which the first branch (20) is provided with a supporting portion (21) carrying a steel point or a centering needle as a scribing means (16) and the second branch (10) is provided with a supporting portion (11) carrying a further scribing means or a drawing means (17), while on one of the supporting portions (21), at a right angle to the longitudinal axis (21a) of the latter, an approximately rod-shaped adjusting element (12) is detachably secured, which is constructed in the form of a measuring ruler provided with longitudinal graduations (12a) and in that the other supporting portion (11) has an appropriately constructed passage opening (13) for the adjusting element (12) to be slidingly passed through, in which the adjusting element (12) can be immobilized with the aid of a setscrew (14),

characterized in that

one of the supporting portions (11,21) is provided, next to the adjusting element (12) and, in relation to the longitudinal axis (21a), at a distance hereto with a distance-measuring apparatus (22;122;222) for determining the distance to a reference measuring surface (23;123;223) disposed on the respective oppositely located branch (10,20) or supporting portion (11,21) within the area of the scribing or drawing means (16,17), in which the distance-measuring apparatus

a) is constructed in the form of a combined emitting-receiving unit (22) for the emission and the reception of sound waves and the reference measuring surface (23) in the form of an acoustic reflector, or

b) in the form of a combined emitting-receiving unit (122) for the emission and the reception of electromagnetic waves, more particular of light waves, and the reference measuring surface (123) in the form of a light wave reflector or electromagnetic wave reflector, or

c) in the form of a laser interferometer (222), in which one of the supporting portions (21) is provided, in a housing, with a laser beam generating means (25), a stationary mirror (27) mounted on an axis (A) vertically disposed relative to the laser beam emergence direction (M), a photodetector (28) disposed so as to be oppositely located on the axis (A) and a semi-transparent mirror (26) disposed within the area of the point of intersection of the laser beam emergence direction (M) and the axis (A), and in which a mirror (29) is mounted on the opposite supporting portion in the form of a reference measuring surface (223) and in that, on one of the branches (10,20) or on one of the supporting portions (11,21), a measured value display means (30) with a measured value display, such as e.g. numerical display tubes, light emitting diodes or liquid crytals is disposed, and the distance-measuring apparatus (22;122;222) is provided with a computing means (24) for the evaluation and conversion of the measured values obtained.

2. Compasses (200) comprising two branches (110,120), of which the first branch (110) is provided with an interchangeable drawing insert (117) and the second branch (120) is provided with a steel point or a centering needle as a scribing means (116), in which the first branch (110) and the second branch (120) are interconnected with the aid of a connecting web (40) formed of thin, telescopable tubular portions (41,42, 43), in which the tubular portions (41,42,43) are in each case interlockable with each other in the direction of displacement with the aid of engageable, spring-loaded spikes in engagement grooves (45) constructed in the external surface of the tubular portions 42,43, in which, on one of the branches (120), at a bright angle to its longitudinal axis (121a), an approximately rod-shaped, projecting adjusting element (112) is detachably secured which is constructed in the form of a measuring ruler provided with longitudinal graduations (112a), and that the other branch (110) is provided with a pertinently constructed passage opening (113) intended for the adjusting element (112) to pass slidingly through, in which the adjusting element (112) can be immobilized with the aid of a setscrew (114),

characterized in that

one of the branches (110,120) is provided, next to the adjusting element (12) and relative to the longitudinal

EP 0 394 372 B1

axis (21a) at a distance hereto, with a distance-measuring apparatus (22;122;222) for determining the distance to a reference measuring surface (23;123;223) disposed on the respective opposite branch (110,120) within the area of the scribing or drawing means (16,17), in which the distance-measuring apparatus

a) is constructed in the form of a combined emitting-receiving unit (22) for the emission and the reception of sound waves and the reference measuring surface (23) in the form of an acoustic filter, or

b) in the form of a combined emitting-receiving unit (122) for the emission and the reception of electromagnetic waves, more particularly light waves, and the reference measuring surface (123) in the form of a light wave reflector or reflector of electromagnetic waves, or

c) in the form of a laser interferometer (222), in which one of the supporting portions (21) is provided, in a housing, with a laser beam generating means (25), a stationary mrror (27) mounted on an axis (A) vertically disposed relative to the laser beam emergence direction (M), a photodetector (28) disposed so as to be oppositely located on the axis (A) and a semi-transparent mirror (26) disposed within the area of the point of intersection of the laser beam emergence direction (M) and the axis (A), and in which a mirror (29) is mounted on the opposite supporting portion as a reference measuring surface (223), and in that,

on one of the branches (10,20) or supporting portions (11,21), a measured value display means (30) with a measured value display, such as e.g. numerical display tubes, light emitting diodes or liquid crytals is disposed, and the distance-measuring apparatus (22;122;222) is provided with a computing means (24) for the evaluation and conversion of the measured values received.

3. Compasses according to Claim 1 or 2,
characterized in that,
on one of the branches (10,20;110,120) or supporting portions (11,21), a measured value display means (31) comprising numerical display tubes, light emitting diodes or liquid crystals, is disposed.

4. Compasses according to any of Claims 1 to 3,
characterized in that
the distance measuring apparatus (22;122;222) is provided with a storage means into which presettable adjustment means can be inputted and in that an optical or acoustic signal indicating means for displaying the optimal adjustment of the value stored in each case is provided.

5. Compasses according to Claims 1 to 4,
characterized in that
the distance-measuring apparatus (22;122;222) is provided with a computer for performing all necessary calculating operations.

**Revendications**

1. Compas (100) constitué par deux branches (10, 20) reliées de manière pivotante par une charnière (15), l'une des branches (20) présentant une partie porteuse (21) qui porte une pointe en acier ou une aiguille de centrage comme dispositif pour piquer (16) et l'autre branche (10) un autre dispositif pour piquer ou une partie porteuse (11) portant un dispositif de dessin (17), un élément d'ajustage (12) en porte à faux, approximativement en forme de baguette, étant fixé de manière détachable à l'une des parties porteuses (21) à angle droit par rapport à son axe longitudinal (21a), élément qui est configuré comme une règle de mesure pourvue de graduations de longueur (12a), l'autre partie porteuse (11) présentant une découpure de passage (13), configurée de manière correspondante, prévue pour le passage par glissement de l'élément d'ajustage (12), dans laquelle l'élément d'ajustage (12) peut être bloqué à l'aide d'une vis de blocage (14).
caractérisé en ce
que l'une des parties porteuses (11, 21) présente un dispositif de mesure de la distance (22; 122; 222) près de l'élément d'ajustage (12) et à un certain écart de celui-ci par rapport à l'axe longitudinal (21a) pour détecter la distance par rapport à une surface de mesure de référence (23: 123: 223) placée sur la branche (10, 20) ou partie porteuse (11, 21) respectivement opposée dans la zone des dispositifs pour piquer ou pour dessiner (16, 17), le dispositif de mesure de la distance étant configuré

a) comme appareil émetteur-récepteur combiné (22) pour le rayonnement et l'absorption des ondes sonores et la surface de mesure de référence (23) étant configurée comme réflecteur du son ou

b) comme appareil émetteur-récepteur combiné (122) pour le rayonnement et l'absorption des ondes électromagnétiques, en particulier des ondes lumineuses et la surface de mesure de référence (123) étant configurée comme réflecteur pour ondes lumineuses ou ondes électromagnétiques ou

c) comme interféromètre laser dans lequel l'une des parties porteuses (21) présente un dispositif de génération de rayons laser (25) dans un boîtier, un miroir (27) fixe placé sur un axe (A) placé verticalement par rapport au sens de sortie des rayons laser (M), un photodétecteur (28) placé en face sur l'axe (A) et un

9

miroir (26) semi-transparent placé dans la zone du point d'intersection du sens de sortie des rayons laser (M) et de l'axe (A), un miroir (29) étant placé comme surface de mesure de référence (223) sur la partie porteuse opposée et

qu'un dispositif d'affichage des valeurs mesurées (30) avec un affichage des valeurs mesurées, comme par exemple des indicateurs cathodiques à chiffres, des diodes lumineuses ou des cristaux liquides, est placé sur l'une des branches (10, 20) ou des parties porteuses (11, 21) et que le dispositif de mesure de la distance (22; 122; 222) présente un organe de traitement (24) pour l'exploitation et la conversion des valeurs mesurées obtenues

2. Compas (200) constitué par deux branches (110, 120), la première branche (110) présentant un insert à dessin interchangeable (117) et la seconde branche (120) une pointe en acier ou une aiguille de centrage comme dispositif pour piquer (116), la première (110) et la seconde (120) branches étant reliées par une entretoise de jonction (40) formée par des morceaux de tube (41, 42, 43) minces et télescopiques, les morceaux de tube (41, 42, 43) pouvant être arrêtés respectivement les uns par rapport aux autres dans le sens de la translation par des tourillons (46, 47) chargés par ressort pouvant s'engrener dans des rainures d'arrêt (45) configurées sur la surface extérieure des morceaux de tube, un élément d'ajustage (112) en porte à faux, approximativement en forme de baguette, étant fixé de manière détachable à l'une des branches (120) à angle droit par rapport à son axe longitudinal (121a), élément qui est configuré comme une règle de mesure pourvue de graduations de longueur (112a), l'autre branche (110) présentant une découpure de passage (113) configurée de manière correspondante, prévue pour le passage par glissement de l'élément d'ajustage (112), dans laquelle l'élément d'ajustage (112) peut être bloqué à l'aide d'une vis de blocage (114),

**caractérisé en ce**

que l'une des parties porteuses (110, 120) présente un dispositif de mesure de la distance (22: 122; 222) près de l'élément d'ajustage (12) et à un certain écart de celui-ci par rapport à l'axe longitudinal (21a) pour détecter la distance par rapport à une surface de mesure de référence (23; 123; 223) placée sur la branche (110, 120) respectivement opposée dans la zone des dispositifs pour piquer ou pour dessiner (16, 17), le dispositif de mesure de la distance étant configuré

a) comme appareil émetteur-récepteur combiné (22) pour le rayonnement et l'absorption des ondes sonores et la surface de mesure de référence (23) étant configurée comme réflecteur du son ou

b) comme appareil émetteur-récepteur combiné (122) pour le rayonnement et l'absorption des ondes électromagnétiques, en particulier des ondes lumineuses et la surface de mesure de référence (123) étant configurée comme réflecteur pour ondes lumineuses ou ondes électromagnétiques ou

c) comme interféromètre laser dans lequel l'une des parties porteuses (21) présente un dispositif de génération de rayons laser (25) dans un boîtier, un miroir (27) fixe placé sur un axe (A) placé verticalement par rapport au sens de sortie des rayons laser (M), un photodétecteur (28) placé en face sur l'axe (A) et un miroir (26) semi-transparent placé dans la zone du point d'intersection du sens de sortie des rayons laser (M) et de l'axe (A), un miroir (29) étant placé comme surface de mesure de référence (223) sur la partie porteuse opposée et

qu'un dispositif d'affichage des valeurs mesurées (30) avec un affichage des valeurs mesurées, comme par exemple des indicateurs cathodiques à chiffres, des diodes lumineuses ou des cristaux liquides, est placé sur l'une des branches (110, 120) et que le dispositif de mesure de la distance (22; 122: 222) présente un organe de traitement (24) pour l'exploitation et la conversion des valeurs mesurées obtenues

3. Compas selon la revendication 1 ou 2,

**caractérisé en ce**

qu'un dispositif d'affichage des valeurs mesurées (31) constitué par des indicateurs cathodiques à chiffres, des diodes lumineuses ou des cristaux liquides est placé sur l'une des branches (10, 20 : 110, 120) ou des parties porteuses (11, 21).

4. Compas selon l'une des revendications 1 à 3,

**caractérisé en ce que**

le dispositif de mesure de la distance (22; 122: 222) présente un organe de mémorisation dans lequel on peut entrer des valeurs de réglage prédéterminées et qu'une indication de signal visuelle ou acoustique est prévue pour indiquer le réglage optimal de la valeur respectivement mémorisée.

5. Compas selon l'une des revendications 1 à 4,

**caractérisé en ce que**

le dispositif de mesure de la distance (22; 122; 222) est équipé d'un ordinateur pour effectuer toutes les opérations de calcul nécessaires.

FIG.1

*FIG. 2*

*FIG. 3*

FIG. 4

FIG. 5

EP 0 394 372 B1